# FASCICULE DE BREVET EUROPEEN

(11) **EP 2 307 768 B1**
(45) Date de publication et mention de la délivrance du brevet: **28.03.2012**
(21) Numéro de dépôt: 09784447.6
(22) Date de dépôt: 30.06.2009
(51) Int. Cl.: F16H 61/02, F16H 61/688

(54) **PROCEDE ET DISPOSITIF DE COMMANDE DE TRANSMISSION D'UN GROUPE MOTOPROPULSEUR DE VEHICULE AUTOMOBILE**
VERFAHREN UND VORRICHTUNG ZUR STEUERUNG DER ÜBERTRAGUNG DES ANTRIEBSAGGREGATS EINES KRAFTFAHRZEUGS
METHOD AND DEVICE FOR CONTROLLING THE TRANSMISSION OF A MOTOR VEHICLE POWER PLANT

(30) Priorité: 10.07.2008 FR 0854706
(43) Date de publication de la demande: 13.04.2011
(73) Titulaire: Renault S.A.S., 92100 Boulogne-Billancourt (FR)
(72) Inventeur: VANDEKERKHOVE, Rémi, F-75012 Paris (FR)
(86) Numéro de dépôt international: PCT/FR2009/051258
(87) Numéro de publication internationale: WO 2010/004187

(56) Documents cités:
- EP-A- 1 347 195
- EP-A- 1 826 464
- DE-A1- 10 036 820
- DE-C1- 19 937 716
- US-B1- 6 286 381

## Description

La présente invention concerne un procédé de commande d'une transmission automatisée à rapports discrets pour groupe motopropulseur de véhicule automobile. Elle concerne aussi un dispositif mettant en oeuvre un tel procédé de commande.

Ce procédé s'applique avantageusement aux commandes de boîtes de vitesses à double embrayage sec, ou de boîtes de vitesses automatiques hydrauliques, que le véhicule soit en configuration de conduite automatique, ou que le conducteur décide de conserver le mode de changement de vitesse manuel. Le procédé peut aussi s'appliquer à des dispositifs de transmission semi-automatiques, où le conducteur dispose uniquement d'un mode de changement de vitesse manuel, l'embrayage étant géré de manière automatisée. Il peut également s'appliquer à tout procédé de commande d'un organe du véhicule qui nécessiterait de connaître la direction du prochain changement de rapport.

Sur une boîte de vitesses à double embrayage, il y a deux arbres primaires, en relation avec l'arbre secondaire de sortie de boite via une série de rapports de démultiplication. Généralement un des arbres primaires supporte les rapports impairs (1, 3, 5...), l'autre les rapport pairs (2, 4, 6..) ainsi que la marche arrière.

Lorsque le véhicule roule, le couple moteur est transmis via un seul des deux arbres primaires. L'autre arbre primaire est inactif : l'embrayage le reliant au moteur est ouvert, il n'y a pas de transmission de couple. Pour cet arbre primaire, on peut au choix désengager tous les rapports ou alors en engager un. La connaissance de la direction du prochain changement de rapport, montant ou descendant, permet donc de déduire à tout moment quel est le meilleur rapport à engager sur l'arbre primaire inactif. Ce rapport peut alors être engagé par avance sur l'arbre inactif, de sorte que le changement de rapport peut-être effectué plus rapidement au moment où le conducteur ou le calculateur de bord en prend la décision.

Le brevet US 6 286 381 (Reed) décrit un procédé de présélection du rapport sur l'arbre primaire inactif d'une boîte à double embrayage. Ce document propose d'effectuer la présélection de rapport lorsque la vitesse du véhicule devient égale ou supérieure à un seuil de vitesse, qui tient compte de la vitesse à laquelle devra se faire le changement de rapport, et du temps qu'il faudra au véhicule pour atteindre cette vitesse. Ce document suppose que l'on connaît a priori la valeur du prochain changement de rapport, et propose de retarder le plus possible la présélection du prochain rapport au cas où le changement de rapport ne deviendrait pas effectif.

La demande de brevet EP 1 347 195 (Nissan Motor) propose de calculer les régimes qu'atteindrait le moteur dans les deux hypothèses où un changement de rapport serait effectué à la hausse ou à la baisse. Dans le cas où un de ces régimes moteur sort d'une plage prédéterminée (non explicitée dans le document), une présélection de l'autre rapport est effectuée sur l'arbre inactif du double embrayage.

Le document EP-A-1 826 464 décrit un procédé de commande selon le préambule de la revendication 1.

Le document DE-A1-100 36 820 décrit un dispositif de commande selon le préambule de la revendication 10.

Aucun de ces documents ne propose une méthode pour estimer à tout moment la direction la plus probable du prochain changement de rapport de transmission, afin de pouvoir effectuer en permanence une présélection optimale du rapport prochainement imposé.

La présente invention a pour objet un procédé de commande optimisé d'un système de transmission automatique ou semi-automatique, permettant un prépositionnement permanent de certains paramètres de commande en vue du prochain changement de rapport de transmission. Ce prépositionnement peut par exemple consister en la sélection mécanique d'un rapport sur un arbre de double embrayage, de sorte qu'au moment de la décision d'effectuer le changement, il suffise de désaccoupler l'arbre actif et d'embrayer quasi simultanément sur l'arbre en attente, déjà engagé au bon rapport. Le prépositionnement peut également être appliquée à d'autres organes. Par exemple dans une boîte de commande hydraulique, si les organes à actionner lors du prochain rapport à engager sont connus, les pressions hydrauliques des actionneurs correspondants peuvent être amenées d'une valeur de repos ou d'une valeur de commande, à une valeur de transition proche de celle que la pression devra franchir au moment du changement de rapport. Les organes freins ou les organes embrayages ainsi prépositionnés se trouveront juste en deçà, ou juste au delà, de leur pression de patinage.

A cet effet, l'invention propose un procédé de commande d'une transmission automatisée à rapports discrets pour groupe motopropulseur de véhicule automobile comprenant une étape de prépositionnement d'au moins un paramètre de fonctionnement en fonction du prochain changement de rapport à effectuer. La valeur imposée audit paramètre de fonctionnement est fonction d'une variable booléenne de montée qui est positive si le prochain changement de rapport attendu est une montée dans les rapports, et qui est négative si le prochain changement de rapport attendu est une descente dans les rapports ou un passage en marche arrière. Ladite variable booléenne est calculée en continu quand le véhicule est en mouvement, c'est à dire que cette variable est recalculée périodiquement à une fréquence qui dépend du fonctionnement du calculateur, et qui ne dépend pas du fait qu'un changement de rapport soit imminent ou non. Avantageusement, on utilise comme données d'entrée une valeur de consigne d'accélérateur, une consigne ou une valeur actuelle de rapport de transmission, une valeur de levier de vitesse, et des valeurs de corrections dynamiques autorisant, retardant ou interdisant un changement de rapport montant imminent.

Dans un mode de réalisation préféré, le procédé comporte une étape d'évaluation de la pente de la chaussée sur laquelle se déplace le véhicule, une étape de calcul de l'accélération du véhicule par dérivation de sa vitesse longitudinale, et une étape d'évaluation du seuil de consigne d'accélérateur qui permettrait d'avoir une vitesse constante du véhicule.

Dans une variante de réalisation du procédé, le mode de calcul de la variable booléenne de montée est fonction de la consigne ou de la valeur actuelle du rapport de transmission, et pour au moins une des valeur de ce rapport de transmission, on calcule la variable booléenne de montée, en attribuant à la variable booléenne de montée une valeur négative si les deux conditions suivantes sont vraies simultanément:
- la valeur de consigne d'accélérateur est inférieure au seuil de consigne d'accélérateur permettant d'avoir une vitesse constante du véhicule ;
- l'accélération du véhicule est inférieure à un seuil d'accélération;
en attribuant à la variable booléenne de montée une valeur positive si la première de ces deux conditions n'est pas vraie;
et en conservant à la variable booléenne de montée sa valeur si la première de ces conditions est vraie et la seconde de ces conditions n'est pas vraie.

Une autre variante de réalisation du procédé comporte une étape d'évaluation d'un rapport de transmission optimal en fonction de la vitesse du véhicule et du point de fonctionnement du moteur. Dans cette variante, on génère en continu une première variable booléenne qui est positive si les trois conditions suivantes sont vraies simultanément :
- le rapport de transmission optimal est supérieur à la consigne ou à la valeur actuelle de rapport de transmission;
- la valeur de levier de vitesse indique que la boîte est en mode automatique;
- aucune correction dynamique n'interdit un changement de rapport montant à cet instant;

Cette première variable booléenne est négative si l'une des trois conditions précédentes n'est pas vraie.

Toujours dans la même variante du procédé, le mode de calcul de la variable booléenne de montée est fonction de la consigne ou de la valeur actuelle du rapport de transmission, et pour au moins une des valeur de ce rapport de transmission, on calcule la variable booléenne de montée, en attribuant à la variable booléenne de montée une valeur négative si les trois conditions suivantes sont vraies simultanément :
- la valeur de consigne d'accélérateur est inférieure au seuil de consigne d'accélérateur permettant d'avoir une vitesse constante du véhicule ;
- l'accélération du véhicule est inférieure à un seuil d'accélération;
- la première variable booléenne est négative;
en attribuant à la variable booléenne de montée une valeur positive si la première de ces trois conditions n'est pas vraie;
et en conservant à la variable booléenne de montée sa valeur si la première de ces conditions est vraie mais que la deuxième ou la troisième condition n'est pas vraie.

De manière préférentielle, on impose à la variable booléenne de montée une valeur négative si la consigne ou la valeur actuelle de rapport est le rapport maximal, et une valeur positive si la consigne ou la valeur actuelle de rapport est la marche arrière.

Avantageusement, dans le cas où la consigne ou la valeur actuelle de rapport est la première vitesse :
- on impose à la variable booléenne de montée une valeur positive quand la vitesse du véhicule est supérieure à un premier seuil;
- on impose à la variable booléenne de montée une valeur négative quand la vitesse du véhicule est inférieure à un second seuil inférieur ou égal au précédent;
- on garde à la variable booléenne de montée sa valeur correspondant au dernier des deux seuils franchis quand la vitesse du véhicule est comprise entre le premier et le second seuil.

Ce procédé peut être appliqué avantageusement à un véhicule dont le groupe motopropulseur comprend un embrayage double : on pilote alors l'engagement du prochain rapport à passer sur l'arbre couramment inactif du double embrayage par l'un desdits paramètres de fonctionnement, dépendant de la valeur de la variable booléenne de montée.

Ce procédé peut également être appliqué à un véhicule dont le groupe motopropulseur comprend une boîte de vitesses automatique hydraulique : l'un desdits paramètre de fonctionnement peut-être la valeur d'une pression hydraulique d'un récepteur de ladite boîte.

L'invention a également pour objet un dispositif de commande d'une transmission automatisée à rapports discrets d'un groupe motopropulseur pour véhicule automobile apte à effectuer un prépositionnement d'au moins un paramètre de fonctionnement du système de transmission en fonction du prochain changement de rapport à effectuer. Ce dispositif comprend un moyen d'estimation de la pente de la chaussée sur laquelle se déplace le véhicule, et comprend une cartographie mémorisée reliant la consigne d'accélérateur, la pente de la chaussée et le signe de l'accélération du véhicule. Le dispositif comprend en outre un bloc logique apte à calculer et à délivrer en continu, quand le véhicule est en mouvement, une variable booléenne de montée signalant une montée ou une descente prochaine de rapport de la transmission, variable booléenne en fonction de laquelle est effectué le prépositionnement dudit paramètre de fonctionnement.

L'invention sera mieux comprise à l'étude d'un mode de réalisation pris à titre d'exemple nullement limitatif illustré par les dessins annexés sur lesquels :
- la figure 1 illustre les principaux éléments d'un dispositif de commande selon l'invention ;
- la figure 2 montre un exemple de schéma logique de fonctionnement d'un bloc de la figure 1 et
- la figure 3 montre un exemple de schéma logique de fonctionnement d'un autre bloc de la figure 1.

Le dispositif selon l'invention est embarqué sur un véhicule automobile (non représenté) équipé d'un groupe motopropulseur relié à au moins une roue motrice par l'intermédiaire d'un système de transmission à rapports discrets (éléments non représentés). Le système de transmission est au moins partiellement automatisé, c'est-à-dire qu'au moins une partie des actions mécaniques nécessaires pour changer de rapport sont effectués par des organes (embrayages ou freins hydrauliques par exemple) ou par des actionneurs (actionneurs électromécaniques dans une boîte de vitesse à double embrayage sec par exemple) pilotés par une unité de commande électronique (UCE). Il peut s'agir d'une unité de commande centrale, ou d'une unité de commande spécifiquement affectée au pilotage d'un ou plusieurs paramètres de fonctionnement de ces organes ou de ces actionneurs.

L'unité de commande électronique reçoit des paramètres de fonctionnement du véhicule en provenance de différents capteurs et calculateurs locaux, par exemple par un réseau multiplexé de type bus CAN ou tout autre moyen de communication entres calculateurs. En fonction des paramètres de fonctionnement du véhicule, l'unité de commande détermine quel rapport de transmission doit être engagé et envoie les signaux nécessaires aux organes/aux actionneurs pour maintenir le rapport actuel ou engager un nouveau rapport.

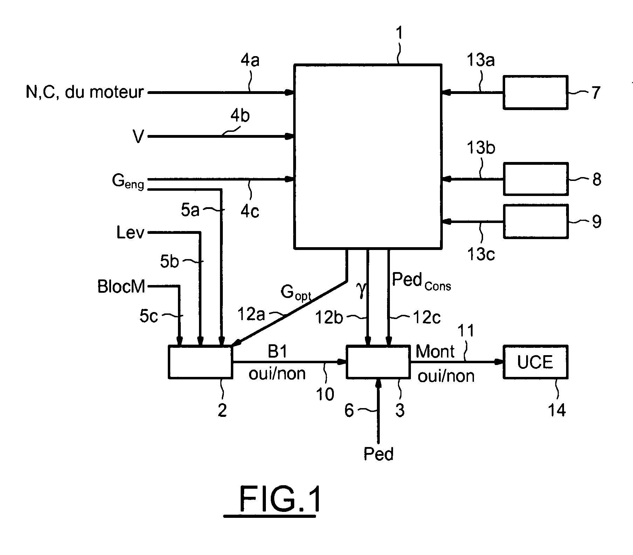

L'unité de commande électronique peut être reliée à un calculateur selon l'invention, représenté sur la figure 1, le calculateur recevant des paramètres de fonctionnement du véhicule par le bus CAN et transmettant à l'unité de commande une variable booléenne en fonction de laquelle l'unité de commande préparera le prochain changement de rapport de transmission. Le calculateur selon l'invention peut également être directement intégré à l'unité de commande.

Tel que représenté sur la figure 1, le calculateur selon l'invention comprend un bloc de calcul 1, un bloc logique 2 et un bloc logique 3 qui reçoivent en entrée divers paramètres de fonctionnement du véhicule par des connexions 4a, 4b, 4c, 5a, 5b, 5c et 6. Le bloc de calcul 1 dispose de trois cartographies mémorisées 7, 8 et 9 auxquelles il accède par des connexions 13a, 13b et 13c respectivement.

Les blocs 2 et 3 reçoivent par des connexions 12a, 12b et 12c, des valeurs calculées par le bloc 1. Le bloc 3 reçoit par une connexion 10, une valeur booléenne B1 calculée par le bloc 2. Le bloc 3 délivre en continu une variable booléenne "Mont" qui est envoyée par une connexion 11 à l'unité électronique de commande 14.

Le bloc de calcul 1 reçoit en entrée par la connexion 4b la valeur V de la vitesse d'avancement du véhicule, calculée par exemple par une autre unité de calcul, non représentée, à partir de la vitesse de rotation des roues du véhicule. Le bloc de calcul 1 reçoit également par la connexion 4a les valeurs du point de fonctionnement du moteur, représentés par la vitesse de rotation N, et par le couple C du moteur, et reçoit par la connexion 4c une valeur G_{eng} indiquant le rapport de transmission actuellement engagé. De la vitesse V d'avancement du véhicule, le bloc 1 déduit par dérivation l'accélération longitudinale du véhicule γ.

Le bloc de calcul 1 calcule ensuite la pente P de la chaussée sur laquelle circule le véhicule, par exemple en utilisant le couple C du moteur, l'accélération γ du véhicule, la valeur G_{eng} du rapport de transmission engagé, certaines données d'inerties du moteur et de la boîte de vitesses du véhicule, et les efforts résistants auxquels est soumis le véhicule. Ces efforts résistants sont lus au travers de la connexion 13b dans la cartographie 8 où ils sont mémorisés comme des fonctions de la vitesse du véhicule. La pente P de la chaussée peut par exemple être déterminée selon la méthode décrite dans la demande de brevet FR2801952 au nom de la demanderesse.

En fonction de la valeur P de pente ainsi calculée, le bloc de calcul 1 extrait par la connexion 13c de la cartographie 9, une valeur désignée par Ped_{Cons}, qui correspond au seuil de consigne d'accélérateur Ped pour laquelle le véhicule se déplacerait à vitesse constante, sans accélérer ni décélérer. Cette consigne d'accélérateur Ped peut par exemple correspondre à un angle de la pédale ou de la manette d'accélérateur, une position de curseur d'accélération ou un angle de papillon des gaz.

Le bloc 1 calcule aussi, en fonction de la vitesse longitudinale (V) du véhicule, du point de fonctionnement du moteur (N, C), et de la pente de la chaussée (P), à l'aide de la cartographie 7 mémorisant des lois de passage de rapports de transmission, un rapport optimal de transmission Gₒₚₜ. Gₒₚₜ est la valeur que l'unité de commande électronique donne à la consigne actuelle de rapport de transmission dès qu'elle en a l'autorisation. En effet, au moment où le rapport optimal de transmission Gₒₚₜ change de valeur, l'unité de commande électronique peut recevoir un ordre de temporisation ou de blocage concernant un changement de valeur du rapport engagé G_{eng}. S'il y a temporisation ou blocage, la consigne de rapport garde sa valeur courante jusqu'à ce que l'interdiction de changement de rapport soit levée, puis la consigne de rapport de transmission prend la valeur Gₒₚₜ calculée, et un changement de rapport est effectué pour que G_{eng} suive la nouvelle consigne Gₒₚₜ. Les interdictions temporaires de changements de rapports, montants ou descendants, sont également désignées par le terme de corrections dynamiques. Dans l'exemple de réalisation de la figure 1, un booléen BlocM, émanant d'un calculateur non représenté, arrive au bloc logique 2 par la connexion 5, et indique la présence (valeur positive) ou l'absence (valeur négative) d'une interdiction des changements de rapport montant.

Le bloc logique 2 reçoit en entrée par une connexion 12a la valeur de rapport de transmission optimal Gₒₚₜ calculée par le bloc 1. Le bloc 2 reçoit également en entrée par la connexion 5a le rapport engagé G_{eng}, par la connexion 5c le booléen BlocM de demande de blocage des changements de rapport montants, et par la connexion 5b une valeur Lev de levier de vitesse, permettant de détecter si la commande de transmission est en mode automatique. La valeur de levier de vitesse indique la consigne de rapport ou de mode de pilotage sélectionnée par le conducteur par exemple au moyen du levier de vitesse, ou de tout autre moyen équivalent (bouton de sélection, manche à balai électronique, curseur...). En prenant pour exemple les boîtes de vitesses qui peuvent passer du mode tout automatique à un mode manuel ou semi-automatique en fonction de la position que le conducteur donne au levier de vitesses, dans la suite de la description la condition "la transmission est en mode automatique" sera transcrite par la condition "Lev=drive".

Le bloc logique 3 reçoit en entrée par la connexion 12b la valeur de l'accélération γ du véhicule, par la connexion 12c le seuil de consigne d'accélérateur (Ped_{Cons}) calculés par le bloc 1, par la connexion 10 la variable booléenne (B1) calculée par le bloc logique 2, et par la connexion 6 la consigne actuelle d'accélérateur (Ped). A partir des ces données, le bloc logique 3 calcule la variable booléenne "Mont" de manière continue. Il attribue notamment une valeur actualisée à cette variable à intervalles de temps plus ou moins réguliers, indépendamment du fait qu'un changement de rapport soit imminent ou non. Le bloc logique 3 est en mesure de calculer cette variable "Mont" dès lors qu'il dispose des valeurs d'entrées citées plus haut.

Le bloc logique 3 envoie la valeur calculée "Mont" par la connexion 11 à l'unité électronique de commande 14, qui la prend en compte pour prépositionner un ou plusieurs paramètres de commande, c'est-à-dire pour amener ces paramètres à des valeurs telles qu'aucun changement de rapport ne se produit encore, mais telles qu'au moment où le changement de rapport deviendra effectif, lesdits paramètres devront passer par ces valeurs. Le prépositionnement de ces paramètres permet donc d'effectuer moins d'opérations, ou des opérations d'ampleur réduites, au moment du changement de rapport effectif, ce qui représente un gain en temps et en confort de conduite.

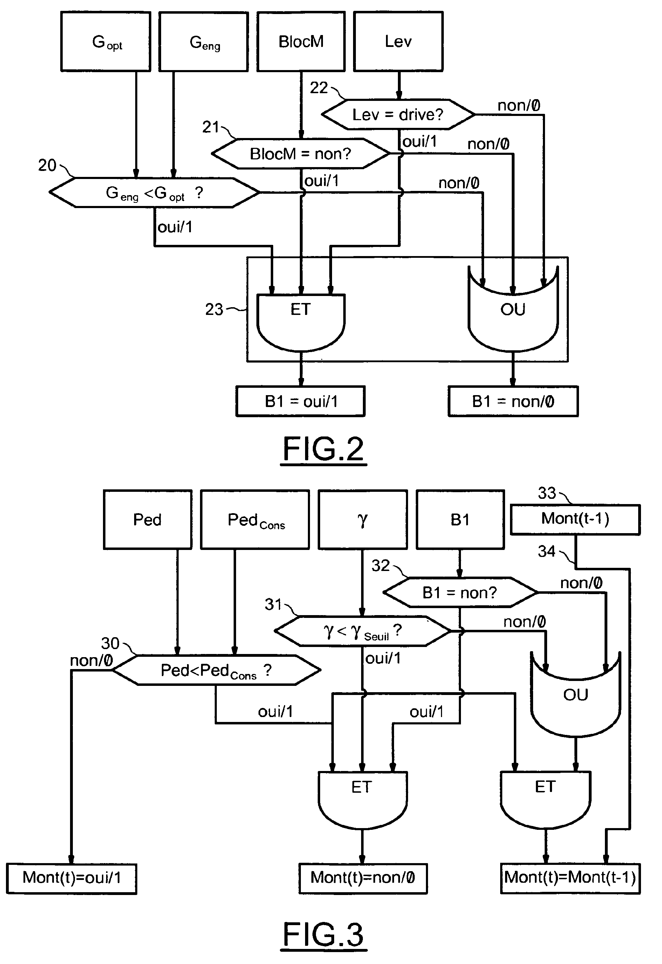

La figure 2 décrit plus en détail le fonctionnement du bloc logique 2 de la figure 1. Le bloc 2 effectue trois tests logiques 20, 21, et 22 dont les résultats sont trois booléens qui peuvent prendre deux valeurs, représentables suivant les notations choisies par 1/0 ou oui/non. Le test logique 20 est une comparaison du rapport engagé G_{eng} pour savoir s'il est strictement inférieur au rapport optimal Gₒₚₜ. Le test logique 21 vérifie, à partir de la valeur "BlocM" l'absence de blocage de changement de rapport montant. Le test logique 22 vérifie, à partir de la valeur "Lev" de position du levier de vitesse, si la commande de la transmission est en mode automatique. Un multiplicateur logique 23 effectue ensuite ce que l'on appelle un produit logique des trois booléens issus des tests 20, 21, et 22, qui vaut 1 si les trois valeurs sont vraies (égales à 1), et vaut zéro si l'une d'elle est fausse (égale à 0). Le résultat de ce produit logique est la valeur booléenne B1 envoyée au bloc logique 3.

Dans le cas où le calculateur qui pilote la transmission automatique n'a pas de fonction qui puisse demander le blocage des changements de rapport montants, on imposera arbitrairement au paramètre BlocM une valeur négative. Dans ce cas l'algorithme de la figure 2 peut être simplifié en supprimant le bloc de test 21.

La figure 3 décrit plus en détail le fonctionnement du bloc logique 3 de la figure 1. Le bloc logique 3 dispose d'une case mémoire 33 dans laquelle est stockée une variable "Mont(t-1)" calculée à l'instant t-1 de calcul précédant l'instant t de calcul en cours. Le bloc logique 3 effectue trois tests logiques 30, 31, et 32 dont les résultats sont trois booléens qui peuvent prendre deux valeurs, représentables suivant les notations choisies par positif/négatif, 1/0 ou oui/non. Le test logique 30 est une comparaison de la consigne actuelle (Ped) d'accélérateur pour savoir si elle est inférieure au seuil de consigne d'accélérateur (Ped_{Cons}). Le test logique 31 est une comparaison de l'accélération (γ) du véhicule pour savoir si elle est inférieure à une valeur seuil γₛₑᵤᵢₗ constante. Le test logique 32 vérifie si la valeur du booléen B1 est négative. En fonction des résultats des tests 30, 31 et 32, le bloc 3 attribue à l'instant t une valeur à la variable Mont(t) comme suit:
- si le résultat du test 30 est négatif, Mont(t) vaut 1
- si les résultats des trois tests 30, 31, 32 sont simultanément positifs, Mont(t) vaut zéro.
- dans les autres cas, c'est-à-dire si le résultat du test 30 est positif et que l'un au moins des résultats des tests 31 ou 32 est négatif, le bloc logique 3 récupère par la connexion 34 la valeur Mont(t-1) dans la case mémoire 33 et attribue cette valeur à la variable Mont(t) courante. La variable Mont(t) conserve donc la valeur qu'elle avait à l'instant de calcul précédent

Le raisonnement décrit plus haut sur le choix des variables booléennes et les valeurs qui leur sont attribuées, doit bien sûr être compris au sens fonctionnel. Les valeurs positives et négatives des variables pourraient êtres désignées par d'autres couples de valeurs, Oui/Non, Vrai/Faux, Montant/Descendant, Drive/Manuel... Les valeurs booléennes pourraient avoir des définitions opposées à celle de la description et des revendications, les propositions logiques citées étant alors reformulées en conséquence.

Il est également à noter que le bloc logique 2 est spécifiquement dédié au mode de gestion entièrement automatisé des changements de rapport. Ce bloc logique peut être supprimé, par exemple dans le cas de commandes de boîtes semi-automatiques où le conducteur doit sélectionner les vitesses manuellement, l'automatisation de la transmission gérant alors le ou les embrayages ainsi que par exemple le prépositionnement des rapports. Dans ces configurations où le changement de rapport est décidé par le conducteur seul, on imposera à la variable booléenne B1 une valeur arbitrairement négative pour le calcul du bloc logique 3.

Avantageusement, dans une variante de réalisation, on pourra utiliser pour le calcul de la variable B1, au lieu de la valeur G_{eng} correspondant au rapport effectivement engagé, la valeur correspondant à la consigne du rapport qui doit être actuellement engagé. Les deux valeurs sont confondues, sauf pendant les brèves périodes où un changement de rapport a été décidé mais pas encore effectué. Cette variante de l'invention prend alors en compte le rapport en cours d'engagement quand les deux valeurs ne coïncident pas. Ainsi, lorsqu'on effectue plusieurs changements de rapports successifs, le prépositionnement qui suit le premier changement de rapport peut être effectué plus rapidement, avant même que le premier changement soit physiquement terminé.

La réalisation de l'invention sous forme de blocs logiques ou de blocs de calculs, peut se faire sous forme de composants électroniques ou de calculateurs physiquement indépendants agencés comme décrit plus haut. L'invention peut également être réalisée en programmant tous les blocs logiques et les blocs de calculs décrits sous forme logicielle, le programme correspondant, ainsi que ses sous programmes, étant implantés dans un ou plusieurs calculateurs, intégrés ou non à l'unité de commande électronique.

En permettant un prépositionnement permanent de certains paramètres, par exemple l'engagement du prochain rapport sur une transmission à double embrayage, l'invention permet d'effectuer un changement de rapport plus rapidement une fois que ce changement est décidé. Le confort et la sécurité de conduite s'en trouvent améliorés.

## Revendications

1. Procédé de commande d'une transmission automatisée à rapports discrets pour groupe motopropulseur de véhicule automobile comprenant une étape de prépositionnement d'au moins un paramètre de fonctionnement en fonction du prochain changement de rapport à effectuer, **caractérisé en ce que** la valeur imposée audit paramètre de fonctionnement est fonction d'une variable booléenne de montée qui est positive si le prochain changement de rapport attendu est une montée dans les rapports, et qui est négative si le prochain changement de rapport attendu est une descente dans les rapports ou un passage en marche arrière, ladite variable booléenne étant calculée en continu quand le véhicule est en mouvement.

2. Procédé selon la revendication 1, dans lequel on utilise comme données d'entrée une valeur de consigne d'accélérateur, une consigne ou une valeur actuelle de rapport de transmission, une valeur de levier de vitesse, et des valeurs de corrections dynamiques autorisant, retardant ou interdisant un changement de rapport montant imminent.

3. Procédé selon la revendication précédente, comportant une étape d'évaluation de la pente de la chaussée sur laquelle se déplace le véhicule, une étape de calcul de l'accélération du véhicule par dérivation de sa vitesse longitudinale, et une étape d'évaluation du seuil de consigne d'accélérateur qui permettrait d'avoir une vitesse constante du véhicule.

4. Procédé selon la revendication 3, dans lequel le mode de calcul de la variable booléenne de montée est fonction de la consigne ou de la valeur actuelle du rapport de transmission, et pour au moins une des valeur de ce rapport de transmission, on calcule la variable booléenne de montée, en attribuant à la variable booléenne de montée une valeur négative si les deux conditions suivantes sont vraies simultanément:
- la valeur de consigne d'accélérateur est inférieure au seuil de consigne d'accélérateur permettant d'avoir une vitesse constante du véhicule ;
- l'accélération du véhicule est inférieure à un seuil d'accélération;
en attribuant à la variable booléenne de montée une valeur positive si la première de ces deux conditions n'est pas vraie;
et en conservant à la variable booléenne de montée sa valeur si la première de ces conditions est vraie et la seconde de ces conditions n'est pas vraie.

5. Procédé selon la revendication 3, comportant une étape d'évaluation d'un rapport de transmission optimal en fonction de la vitesse du véhicule et du point de fonctionnement du moteur, et dans lequel on génère en continu une première variable booléenne qui est positive si les trois conditions suivantes sont vraies simultanément :
- le rapport de transmission optimal est supérieur à la consigne ou à la valeur actuelle de rapport de transmission;
- la valeur de levier de vitesse indique que la boîte est en mode automatique;
- aucune correction dynamique n'interdit un changement de rapport montant à cet instant;
et qui est négative si l'une de ces trois conditions n'est pas vraie;
puis on calcule, pour au moins une des valeurs que peut prendre le rapport de transmission, la variable booléenne de montée, en attribuant à la variable booléenne de montée une valeur négative si les trois conditions suivantes sont vraies simultanément :
- la valeur de consigne d'accélérateur est inférieure au seuil de consigne d'accélérateur permettant d'avoir une vitesse constante du véhicule ;
- l'accélération du véhicule est inférieure à un seuil d'accélération;
- la première variable booléenne est négative;
en attribuant à la variable booléenne de montée une valeur positive si la première de ces trois conditions n'est pas vraie;
et en conservant à la variable booléenne de montée sa valeur si la première de ces conditions est vraie mais que la deuxième ou la troisième condition n'est pas vraie.

6. Procédé selon l'une quelconque des revendications précédentes, dans lequel on impose à la variable booléenne de montée une valeur négative si la consigne ou la valeur actuelle de rapport est le rapport maximal, et une valeur positive si la consigne ou la valeur actuelle de rapport est la marche arrière.

7. Procédé selon l'une quelconque des revendications précédente, dans lequel, dans le cas où la consigne ou la valeur actuelle de rapport est la première vitesse :
- on impose à la variable booléenne de montée une valeur positive quand la vitesse du véhicule est supérieure à un premier seuil;
- on impose à la variable booléenne de montée une valeur négative quand la vitesse du véhicule est inférieure à un second seuil inférieur ou égal au précédent;
- on garde à la variable booléenne de montée sa valeur correspondant au dernier des deux seuils franchis quand la vitesse du véhicule est comprise entre le premier et le second seuil.

8. Procédé selon l'une quelconque des revendications précédentes, dans lequel le groupe motopropulseur comprend un embrayage double, et on pilote l'engagement du prochain rapport à passer sur l'arbre couramment inactif du double embrayage par l'un desdits paramètres de fonctionnement.

9. Procédé selon l'une quelconque des revendications précédentes, dans lequel le groupe motopropulseur comprend une boîte de vitesses automatique hydraulique, et l'un desdits paramètre de fonctionnement est la valeur d'une pression hydraulique d'un récepteur de ladite boîte.

10. Dispositif de commande d'une transmission automatisée à rapports discrets d'un groupe motopropulseur pour véhicule automobile apte à effectuer un prépositionnement d'au moins un paramètre de fonctionnement du système de transmission en fonction du prochain changement de rapport à effectuer, comprenant un moyen d'estimation (1) de la pente de la chaussée sur laquelle se déplace le véhicule, et comprenant une cartographie mémorisée (9) reliant la consigne d'accélérateur, la pente de la chaussée et le signe de l'accélération du véhicule, **caractérisé en ce qu'**il comprend en outre un bloc logique (3) apte à calculer et à délivrer en continu quand le véhicule est en mouvement, une variable booléenne de montée qui est positive si le prochain changement de rapport attendu est une montée dans les rapports, qui est négative si le prochain changement de rapport attendu est une descente dans les rapports ou un passage en marche arrière, ladite variable booléenne étant servant à déterminer la valeur à laquelle doit être prépositionné le paramètre de fonctionnement.

## Claims

1. Method for controlling an automatic transmission with discrete ratios for a drivetrain of a motor vehicle, comprising a step of presetting at least one operating parameter as a function of the next ratio change to be made, **characterized in that** the value imposed on the said operating parameter is a function of a boolean variable of upward change which is positive if the next expected ratio change is an upward change in the ratios, and which is negative if the next expected ratio change is a downward change in the ratios or a transition to reverse, the said boolean variable being calculated continuously when the vehicle is moving.

2. Method according to Claim 1, in which use is made as input data of an accelerator setpoint value, a setpoint or an actual value of transmission ratio, a value of gear lever, and values of dynamic corrections authorizing, delaying or disallowing an imminent upward ratio change.

3. Method according to the preceding claim, comprising a step of evaluating the slope of the road on which the vehicle is travelling, a step of calculating the acceleration of the vehicle by derivation of its longitudinal speed, and a step of evaluating the accelerator setpoint threshold that would make it possible to have a constant speed of the vehicle.

4. Method according to Claim 3, in which the method of calculating the boolean variable of upward change is a function of the setpoint or of the actual value of the transmission ratio, and for at least one of the values of this transmission ratio, the boolean variable of upward change is calculated by allocating to the boolean variable of upward change a negative value if the following two conditions are true simultaneously:
- the value of accelerator setpoint is below the accelerator setpoint threshold making it possible to have a constant speed of the vehicle;
- the acceleration of the vehicle is below an acceleration threshold;
by allocating to the boolean variable of upward change a positive value if the first of these two conditions is not true;
and by retaining its value for the boolean variable of upward change if the first of these conditions is true and the second of these conditions is not true.

5. Method according to Claim 3, comprising a step of evaluating an optimal transmission ratio as a function of the speed of the vehicle and of the operating point of the engine, and in which a first boolean variable which is positive is generated continuously if the following three conditions are true simultaneously:
- the optimal transmission ratio is higher than the setpoint or than the actual transmission ratio value;
- the value of gear lever indicates that the gearbox is in automatic mode;
- no dynamic correction disallows an upward ratio change at this moment;
and which is negative if one of these three conditions is not true;
then, for at least one of the values that the transmission ratio can take, the boolean variable of upward change is calculated by allocating to the boolean variable of upward change a negative value if the following three conditions are true simultaneously:
- the accelerator setpoint value is below the accelerator setpoint threshold making it possible to have a constant speed of the vehicle;
- the acceleration of the vehicle is below an acceleration threshold;
- the first boolean variable is negative;
by allocating to the boolean variable of upward change a positive value if the first of these three conditions is not true;
and by retaining its value for the boolean variable of upward change if the first of these conditions is true but the second or the third condition is not true.

6. Method according to any one of the preceding claims, in which a negative value is imposed on the boolean variable of upward change if the ratio setpoint or actual value is the maximal ratio, and a positive value if the ratio setpoint or actual value is reverse.

7. Method according to any one of the preceding claims, in which, if the ratio setpoint or actual value is the first speed:
- a positive value is imposed on the boolean variable of upward change when the speed of the vehicle is greater than a first threshold;
- a negative value is imposed on the boolean variable of upward change when the speed of the vehicle is below a second threshold below or equal to the previous threshold;
- its value is retained for the boolean variable of upward change corresponding to the last of the two thresholds crossed when the speed of the vehicle is between the first and the second threshold.

8. Method according to any one of the preceding claims, in which the drivetrain comprises a double clutch, and the engagement of the next ratio to be transferred to the currently inactive shaft of the double clutch is controlled by one of the said operating parameters.

9. Method according to any one of the preceding claims, in which the drivetrain comprises a hydraulic automatic gearbox, and one of the said operating parameters is the value of a hydraulic pressure of a slave cylinder of the said gearbox.

10. Device for controlling an automatic transmission with discrete ratios of a drivetrain for a motor vehicle capable of carrying out a presetting of at least one operating parameter of the transmission system as a function of the next ratio change to be made, comprising an estimating means (1) for estimating the slope of the road on which the vehicle is travelling, and comprising a stored map (9) connecting the accelerator setpoint, the slope of the road and the sign of the acceleration of the vehicle, **characterized in that** it also comprises a logical unit (3) capable of calculating and of continuously delivering, when the vehicle is moving, a boolean variable of upward change which is positive if the next expected ratio change is an upward change in the ratios, which is negative if the next expected ratio change is a downward change in the ratios or a transition to reverse, the said boolean variable being used to determine the value at which the operating parameter must be preset.

## Patentansprüche

1. Verfahren zur Steuerung eines automatischen Getriebes mit diskreten Gängen für eine Antriebseinheit eines Kraftfahrzeugs, das einen Schritt der Vorpositionierung mindestens eines Betriebsparameters abhängig vom nächsten durchzuführenden Gangwechsel enthält, **dadurch gekennzeichnet, dass** der dem Betriebsparameter vorgegebene Wert von einer Booleschen Hochschalt-Variablen abhängt, die positiv ist, wenn der nächste erwartete Schaltvorgang ein Hochschalten ist, und die negativ ist, wenn der nächste erwartete Schaltvorgang ein Herunterschalten oder ein Übergang in den Rückwärtsgang ist, wobei die Boolesche Variable durchgehend berechnet wird, wenn das Fahrzeug in Bewegung ist.

2. Verfahren nach Anspruch 1, bei dem als Eingangsdaten ein Gaspedal-Sollwert, ein Sollwert oder ein aktueller Wert eines Übersetzungsverhältnisses, ein Wert eines Gangschalthebels und dynamische Korrekturwerte verwendet werden, die einen bevorstehenden Hochschaltvorgang erlauben, verzögern oder verhindern.

3. Verfahren nach dem vorhergehenden Anspruch, das einen Schritt der Bewertung des Gefälles der Straße, auf der das Fahrzeug sich bewegt, einen Schritt des Berechnens der Beschleunigung des Fahrzeugs durch Ableitung seiner Längsgeschwindigkeit, und einen Schritt der Bewertung der Gaspedal-Sollwertschwelle aufweist, die es ermöglichen würde, eine konstante Geschwindigkeit des Fahrzeugs zu haben.

4. Verfahren nach Anspruch 3, bei dem die Berechnungsweise der Boolesche Hochschalt-Variablen vom Sollwert oder vom aktuellen Wert des Übersetzungsverhältnisses abhängt, und für mindestens einen der Werte dieses Übersetzungsverhältnisses die Boolesche Hochschalt-Variable berechnet wird, indem der Booleschen Hochschalt-Variable ein negativer Wert zugeteilt wird, wenn die zwei folgenden Bedingungen gleichzeitig wahr sind:
- der Gaspedal-Sollwert ist geringer als die Gaspedal-Sollwertschwelle, die es ermöglicht, eine konstante Geschwindigkeit des Fahrzeugs zu haben;
- die Beschleunigung des Fahrzeugs ist geringer als eine Beschleunigungsschwelle;
indem der Booleschen Hochschalt-Variablen ein positiver Wert zugeteilt wird, wenn die erste dieser zwei Bedingungen nicht wahr ist;
und indem der Wert der Booleschen Hochschalt-Variablen beibehalten wird, wenn die erste dieser Bedingungen wahr und die zweite dieser Bedingungen nicht wahr ist.

5. Verfahren nach Anspruch 3, das einen Schritt der Bewertung eines optimalen Übersetzungsverhältnisses abhängig von der Geschwindigkeit des Fahrzeugs und dem Betriebspunkt des Motors aufweist, und bei dem durchgehend eine erste Boolesche Variable erzeugt wird, die positiv ist, wenn die drei folgenden Bedingungen gleichzeitig wahr sind:
- das optimale Übersetzungsverhältnis ist höher als der Sollwert oder der aktuelle Wert des Übersetzungsverhältnisses;
- der Ganghebelwert zeigt an, dass das Getriebe in der Automatik-Betriebsart ist;
- keine dynamische Korrektur verhindert einen Hochschaltvorgang in diesem Moment;
und die negativ ist, wenn eine dieser drei Bedingungen nicht wahr ist;
dann für mindestens einen der Werte, die das Übersetzungsverhältnis annehmen kann, die Boolesche Hochschalt-Variable berechnet wird,
indem der Booleschen Hochschalt-Variablen ein negativer Wert zugeteilt wird, wenn die drei folgenden Bedingungen gleichzeitig wahr sind:
- der Gaspedal-Sollwert ist geringer als die Gaspedal-Sollwertschwelle, die es ermöglicht, eine konstante Geschwindigkeit des Fahrzeugs zu haben;
- die Beschleunigung des Fahrzeugs ist geringer als eine Beschleunigungsschwelle;
- die erste Boolesche Variable ist negativ;
indem der Booleschen Hochschalt-Variablen ein positiver Wert zugeteilt wird, wenn die erste dieser drei Bedingungen nicht wahr ist;
und indem der Wert der Booleschen Hochschalt-Variablen beibehalten wird, wenn die erste dieser Bedingungen wahr, aber die zweite oder die dritte Bedingung nicht wahr ist.

6. Verfahren nach einem der vorhergehenden Ansprüche, bei dem der Booleschen Hochschalt-Variablen ein negativer Wert vorgegeben wird, wenn der Verhältnis-Sollwert oder der aktuelle Wert das maximale Verhältnis ist, und ein positiver Wert vorgegeben wird, wenn der Verhältnis-Sollwert oder der aktuelle Wert der Rückwärtsgang ist.

7. Verfahren nach einem der vorhergehenden Ansprüche, bei dem in dem Fall, in dem der Verhältnis-Sollwert oder der aktuelle Wert der erste Gang ist:
- der Booleschen Hochschalt-Variablen ein positiver Wert vorgegeben wird, wenn die Geschwindigkeit des Fahrzeugs höher als eine erste Schwelle ist;
- der Booleschen Hochschalt-Variablen ein negativer Wert vorgegeben wird, wenn die Geschwindigkeit des Fahrzeugs geringer als eine zweite Schwelle geringer als die oder gleich der vorhergehenden ist;
- der Wert der Booleschen Hochschalt-Variablen beibehalten wird, wenn ihr Wert der letzten der zwei überschrittenen Schwellen entspricht, wenn die Geschwindigkeit des Fahrzeugs zwischen der ersten und der zweiten Schwelle liegt.

8. Verfahren nach einem der vorhergehenden Ansprüche, bei dem die Antriebseinheit eine Doppelkupplung enthält, und das Einrücken des nächsten auf der derzeit inaktiven Welle der Doppelkupplung einzulegenden Gangs durch einen der Betriebparameter gesteuert wird.

9. Verfahren nach einem der vorhergehenden Ansprüche, bei dem die Antriebseinheit ein hydraulisches Automatikgetriebe enthält, und einer der Betriebsparameter der Wert eines Hydraulikdrucks eines Empfängers des Getriebes ist.

10. Steuervorrichtung eines automatischen Getriebes mit diskreten Gängen einer Antriebseinheit für ein Kraftfahrzeug, die eine Vorpositionierung mindestens eines Betriebsparameters des Übersetzungssystems abhängig vom nächsten durchzuführenden Gangwechsel durchführen kann, die eine Schätzeinrichtung (1) des Gefälles der Straße, auf der das Fahrzeug sich bewegt, und ein gespeichertes Kennfeld (9) enthält, das den Gaspedal-Sollwert, das Gefälle der Straße und das Vorzeichen der Beschleunigung des Fahrzeugs verbindet, **dadurch gekennzeichnet, dass** sie außerdem einen Logikblock (3) enthält, der durchgehend, wenn das Fahrzeug in Bewegung ist, eine Boolesche Hochschalt-Variable berechnen und liefern kann, die positiv ist, wenn der nächste erwartete Gangwechsel ein Hochschalten der Gänge ist, und die negativ ist, wenn der nächste erwartete Gangwechsel ein Herunterschalten oder ein Übergang in den Rückwärtsgang ist, wobei die Boolesche Variable dazu dient, den Wert zu bestimmen, auf den der Betriebsparameter vorpositioniert werden soll.
